(19) Europäisches Patentamt

European Patent Office

Office européen des brevets

(11) **EP 0 913 222 A1**

(12) **EUROPEAN PATENT APPLICATION**

(43) Date of publication:
06.05.1999 Bulletin 1999/18

(51) Int. Cl.⁶: **B23C 5/10**

(21) Application number: 98119598.5

(22) Date of filing: 16.10.1998

(84) Designated Contracting States:
AT BE CH CY DE DK ES FI FR GB GR IE IT LI LU
MC NL PT SE
Designated Extension States:
AL LT LV MK RO SI

(30) Priority: 31.10.1997 IT MI972459

(71) Applicant: Silmax S.P.A.
10074 Lanzo Torinese (TO) (IT)

(72) Inventor: Fumagalli, Enrico
20125 Milano (IT)

(74) Representative:
Petruzziello, Aldo et al
Racheli & C. s.r.l.
Viale San Michele del Carso, 4
20144 Milano (IT)

(54) **Roughing cutter for metal-working tools**

(57) A roughing cutter for working metals, with a rotatory or rotatory translational movement with respect to the workpiece, comprising a toothing formed by teeth (1) and by a profile (2) of the chip breaker groove disposed helically along the cutter and having a rounded section with respect to a plane passing through the axis of the cutter.

FIG.1

Printed by Xerox (UK) Business Services
2.16.7/3.6

## Description

The present invention relates to a roughing cutter for metal-working tools.

The invention refers in particular to a rotating cutting tool wherein the arrangement of the profile of the chip breaker groove on the roughing teeth is substantially helical or screw-shaped and the movement thereof is rotatory or rotatory translational with respect to the workpiece.

The cutters known to the art have various drawbacks. They have a low cutting speed, since the various teeth only partially convey the excess material left by the preceding tooth, and they have little versatility, since it is necessary to change the cutter when passing from working materials of medium toughness to working materials of high toughness. Moreover, there is high wear on the cutter with a resulting short average life of the tool. All this leads to high production costs.

The object of the invention is to eliminate said drawbacks by providing a cutter with a high working yield.

This object is achieved according to the invention with the characteristics listed in appended claim 1.

Preferred embodiments of the invention emerge from the dependent claims.

The roughing cutter according to the invention has a toothing with a rounded profile of the chip breaker groove. This profile allows the pitch of the tooth to be increased. Thus the length of the cutting edge that comes into contact with the material to be cut is 50% greater than that of the tools currently on the market. Thanks to the ratio between the width of the flat part of the tooth and the width of the concave part of the chip breaker profile, each tooth moves the whole of the excess material left by the preceding tooth.

The roughing cuter according to the invention shows greater resistance to wear than with a traditional cutter, a longer average life and increased reliability of the tool. This enables the cutter according to the invention to be used for high cutting speeds and to work on materials of both medium and high toughness. Very tough working parameters can therefore be used even in the absence of lubrication and all this leads to a drastic reduction in production costs for each piece.

Further characteristics of the invention will be made clearer by the detailed description that follows, referring to a purely exemplary and therefore non-limiting embodiment thereof, illustrated in the appended drawings in which:

Figure 1 shows a partial perspective view of a cutter according to the invention;

Figure 2 shows a perspective view of the toothing of the cutter according to the invention;

Figure 3 shows a perspective view in longitudinal section of said toothing taken, for example, along the plane III-III in Figure 2.

The roughing cutter according to the invention will be described with the aid of the figures.

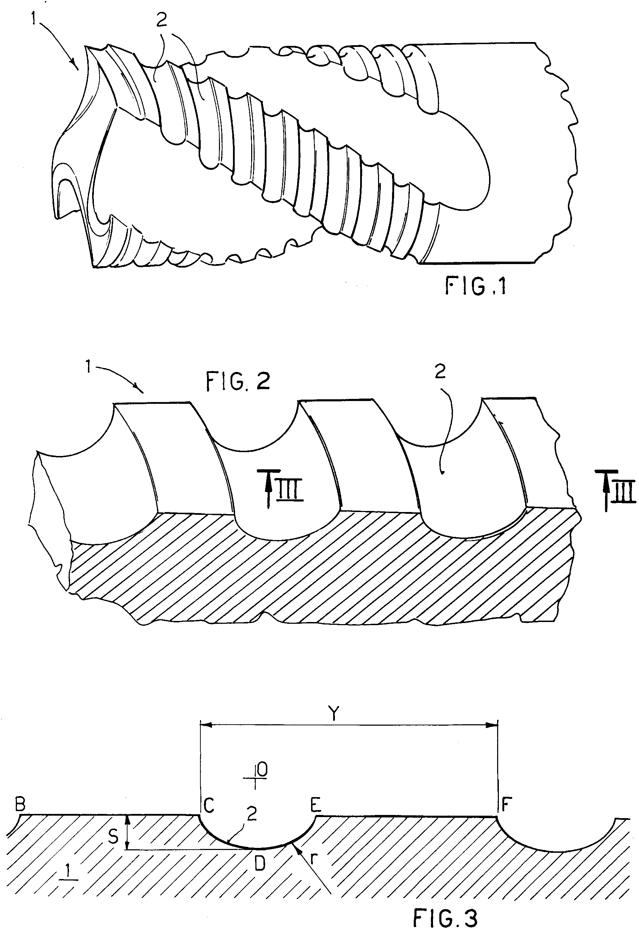

As can be seen in Figure 3, toothing is provided with relieved teeth with a chip breaker groove profile generated as a break in the cutting blade, disposed helically sectioned along a plane passing through the axis of rotation of the tool. In this figure a tooth 1 is shown in particular. A rounded profile 2 of the chip breaker groove is comprised between one tooth and the next. This rounded profile 2 in particular is an arc of a circumference CDE having a bending radius r and a centre shown by the point O. The profile 2 of the chip breaker groove has a depth S at its minimum point. The teeth 1 are disposed on the cutter at a distance indicated by Y measured between one end C of the tooth 1 and the corresponding end F of the next tooth. The different components of the profile 2 of the chip breaker groove have been scaled on the basis of the pitch Y of the teeth 1. The depth S of the chip breaker groove profile 2 is advantageously equal to one-tenth of the pitch Y of the teeth ($S=1/10*Y$) and the bending radius r of the chip breaker groove profile 2 is advantageously equal to one-fourth of the pitch Y of the teeth ($r=¼*Y$). On the circumference of the cutter the profile of the chip breaker groove is shifted for each tooth by an amount Y divided by the number of teeth of said cutter.

Indicatively, the pitch Y of the teeth of the cutter is 2-3 mm. In particular, the pitch Y is about 2 mm for cutters with a diameter of 6, 8 and 10 mm, about 2.5 mm for diameters of 12, 16 and 20 mm, and about 3 mm for diameters of 25, 32, 40 and 50 mm.

In the production of the rough cutter according to the invention, for example, a sintering process can be used, powdered steel that guarantees a particularly homogeneous structure and distribution of the carbides can be employed as the material, and a vacuum heat treatment can be used.

## Claims

1. A roughing cutter for working metals with a rotatory or rotatory translational movement with respect to the wokpiece, comprising a toothing formed by teeth (1), separated by a chip breaker groove profile (2) that runs helically, characterized in that said profile (2) of the chip breaker groove has a rounded shape in a section along the axis of the cutter.

2. A roughing cutter according to claim 1, characterized in that said rounded profile (2) is an arc of a circumference.

3. A roughing cutter for working metals according to claims 1 or 2, characterized in that the profile (2) of the chip breaker groove has a depth, at its minimum point, equal to about one-tenth of the pitch Y between the teeth (1).

4. A roughing cutter for working metals according to claims 2 or 3, characterized in that the profile (2) of the chip breaker groove has a bending radius r equal to about one-quarter of the pitch Y between the teeth (1).

5. A roughing cutter for working metals according to any one of the preceding claims wherein the material used for manufacture thereof is powdered steel.

FIG.1

FIG. 2

FIG.3

**European Patent Office**

## EUROPEAN SEARCH REPORT

Application Number

EP 98 11 9598

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 770 567 A (MORIARTY) 13 September 1988 * column 2, line 35 – column 3, line 49; figure 6 * | 1-4 | B23C5/10 |
| A | US 5 049 009 A (BECK) 17 September 1991 * column 1, line 37 – line 40 * | 5 | |
| A | GB 2 026 915 A (IMW) 13 February 1980 | | |
| A | FR 1 226 327 A (ERRARD) 11 July 1960 | | |
| A | US 4 174 915 A (PEETZ) 20 November 1979 | | |
| A | US 3 548 476 A (CAVE) 22 December 1970 | | |
| A | US 3 117 366 A (CASTOR) 14 January 1964 | | |
| | | | TECHNICAL FIELDS SEARCHED (Int.Cl.6) |
| | | | B23C |

The present search report has been drawn up for all claims

| Place of search | Date of completion of the search | Examiner |
|---|---|---|
| THE HAGUE | 22 December 1998 | Bogaert, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 98 11 9598

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-1998

| Patent document cited in search report | | Publication date | Patent family member(s) | | Publication date |
|---|---|---|---|---|---|
| US 4770567 | A | 13-09-1988 | NONE | | |
| US 5049009 | A | 17-09-1991 | EP | 0532802 A | 24-03-1993 |
| GB 2026915 | A | 13-02-1980 | CA | 1097899 A | 24-03-1981 |
| | | | BR | 7905879 A | 14-10-1980 |
| | | | DE | 2937585 A | 17-07-1980 |
| | | | FR | 2445749 A | 01-08-1980 |
| | | | JP | 1606198 C | 31-05-1991 |
| | | | JP | 2015328 B | 11-04-1990 |
| | | | JP | 55096212 A | 22-07-1980 |
| | | | SE | 440037 B | 15-07-1985 |
| | | | SE | 7907792 A | 06-07-1980 |
| | | | US | 4212568 A | 15-07-1980 |
| FR 1226327 | A | 11-07-1960 | NONE | | |
| US 4174915 | A | 20-11-1979 | CH | 628269 A | 26-02-1982 |
| | | | GB | 1567885 A | 21-05-1980 |
| | | | JP | 53106983 A | 18-09-1978 |
| US 3548476 | A | 22-12-1970 | NONE | | |
| US 3117366 | A | 14-01-1964 | NONE | | |

EPO FORM P0459

For more details about this annex : see Official Journal of the European Patent Office, No. 12/82